# EUROPEAN PATENT SPECIFICATION

(11) **EP 0 702 764 B1**
(45) Date of publication and mention of the grant of the patent: **02.09.1998**
(21) Application number: 94917576.4
(22) Date of filing: 03.06.1994
(51) Int. Cl.: F16K 35/06

(54) **SECURITY DEVICE FOR A THERMOSTAT**
SICHERHEITSVORRICHTUNG FÜR EINEN THERMOSTAT
DISPOSITIF DE SECURITE POUR THERMOSTAT

(30) Priority: 07.06.1993 DE 4318816
(43) Date of publication of application: 27.03.1996
(73) Proprietor: Danfoss A/S, 6430 Nordborg (DK)
(72) Inventor: LARSEN, Henrik, DK-8381 Mundelstrup (DK); ELLEY, Toke, DK-8600 Silkeborg (DK); PERSON, Stig, Gron, DK-8462 Harlev J. (DK); CHRISTENSEN, Kaj, DK-8600 Silkeborg (DK)
(86) International application number: DK9400215
(87) International publication number: WO9429623

(56) References cited:
- DE-A- 2 603 461
- DE-A- 3 102 335
- US-A- 5 251 811

## Description

The invention relates to a security device for a thermostat, which co-operates with an adjusting valve, in particular for radiators, for securing the thermostat against theft and against damage and for securing a sleeve-like, axially ribbed rotary knob on the thermostat housing, which knob serves for adjustment of the desired value, against a predefined rotation, in particular for securing the set angular rotated position of the rotary knob, the security device having a security sleeve which on the one hand engages over a coupling between the thermostat housing and a adjusting valve and on the other hand engages over the rotary knob and is arranged to be non-rotatably connected to the thermostat housing and the rotary knob.

In a known security device of that kind (DE-A-26 03 461), it is possible only to lock the rotary knob by means of the security sleeve so that the set desired value of temperature cannot be changed by rotating the rotary knob.

The invention is based on the problem of providing a security device of that kind in which it is possible to lock the rotary knob not only at a predetermined desired value, but it is also possible to adjust the rotary knob over a selectable range of desired values, which is smaller than the normal range of adjustment.

According to the invention, this problem is solved in that between the rotary knob and the security sleeve there is arranged a coupling element which in different rotated angular positions in relation to the rotary knob is either arranged to be non-rotatably coupled to the knob and to the security sleeve, or allows a limited rotation of the rotary knob relative to the thermostat housing for an adjustment of the desired value between two desired value limits, of which at least one limit is selectable by the non-rotatable coupling of the coupling element in a rotated angular position, corresponding to this desired value limit, relative to the rotary knob.

In this solution, the security sleeve therefore forms not only a device securing against theft and damage, but in combination with the coupling element also allows a fixed setting of a pre-selectable desired value or a pre-selectable desired value limit.

Provision is preferably made for the limited adjustment range of the rotary knob to extend between a minimum setting and an intermediate setting or between an intermediate setting and a maximum setting. In this manner, it is possible to ensure that the actual value of the temperature either does not exceed an adjustable upper limit value or does not fall below an adjustable lower limit value.

It is furthermore advantageous for the rotary knob to be conical and for the coupling element to be a ring which is axially ribbed on its inside correspondingly to the rotary knob. Before the security sleeve is put into position, the ring can therefore be pushed, in the desired rotated angular position, axially onto the rotary knob or, after removal of the security sleeve, can be removed from the rotary knob.

It is desirable for the coupling element and the security sleeve to be brought into interlocking engagement. In this manner, a high degree of assurance against an undesirable relative rotation of the coupling element and security sleeve is guaranteed.

Furthermore, the coupling element may have axial projections, and a projection formed on the inside of the security sleeve can be caused to engage the space between these projections so that it rests against them. When the projection of the security sleeve is in engagement with the intermediate space between the projections of the coupling element, the rotary knob can no longer be rotated once the security sleeve and the thermostat housing have been connected so that they do not rotate relative to one another. If, on the other hand, the projection of the security sleeve lies outside the space between the projections of the coupling element against one or other projection of the coupling element, the rotary knob can be rotated only in a direction of rotation in which the projections of security sleeve and coupling element disengage. The projections of the coupling element therefore limit the adjustment range of the desired values in one direction of rotation to a pre-selectable value.

It is furthermore advantageous if the security sleeve and the thermostat housing are arranged to be brought into interlocking engagement. In this manner, the security sleeve and the rotary knob are very reliably protected against unintentional rotation.

The interlocking engagement between the security sleeve and the thermostat housing can be achieved, for example, in that the security sleeve has on its inside an approximately U-shaped projection which engages over an axial bridge of the thermostat housing.

The security sleeve can then comprise two separate halves which can be joined by means of screws, in particular by special screws and nuts. This enables the security sleeve to be mounted in a simple manner on the rotary knob, or if required, to be removed therefrom, in order to change the desired value setting, without enabling or making it easy for unauthorised persons to remove the security sleeve.

The invention and its developments are described in detail hereinafter with reference to the drawings of a preferred embodiment. In the drawings,
- Fig. 1: shows an exploded view of a security device according to the invention with associated thermostat,
- Fig. 2: shows a perspective internal view of one half of a security sleeve according to the invention,
- Fig. 3: shows a plan view of the thermostat as shown in Fig. 1 coupled to an adjusting valve, with a coupling element in the form of a ring as shown in Fig. 1 positioned thereon,
- Fig. 4: is a perspective view of the thermostat shown in Fig. 1 with the security device according to the invention in the assembled state, partly in section,
- Fig. 5: shows a plan view of the thermostat with the security device shown in Fig. 1 mounted thereon, partly in section, and
- Figs 6 to 8: show plan view of the thermostat, with the security device shown in Fig. 1 mounted thereon, in different rotated angular positions between the coupling element and the security sleeve.

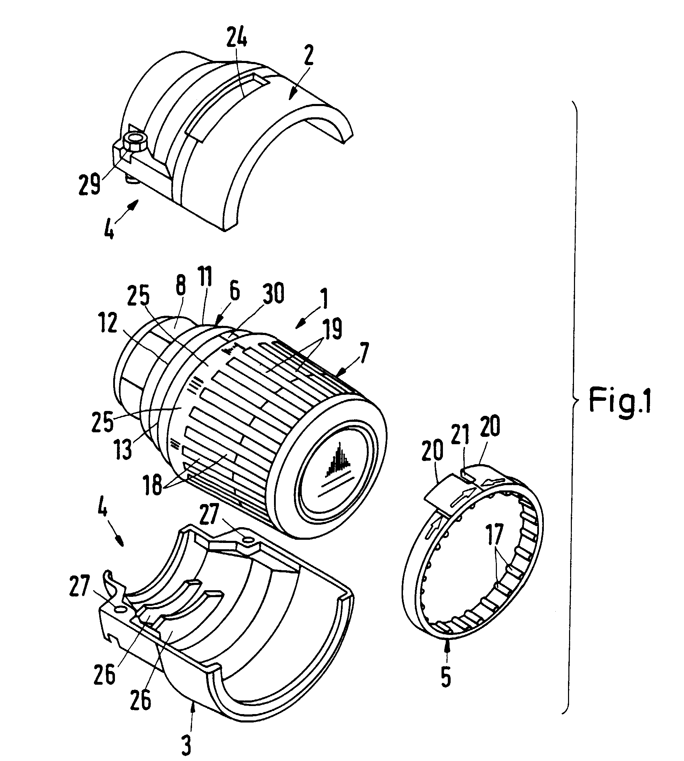

In Fig. 1, the reference number 1 denotes a conventional, commercially available thermostat for actuating adjusting valves of radiators. The reference number 2 denotes one half and the reference number 3 denotes the other half of a security sleeve 4. In addition to the security sleeve 4, the security device furthermore comprises a coupling element 5 in the form of a ring.

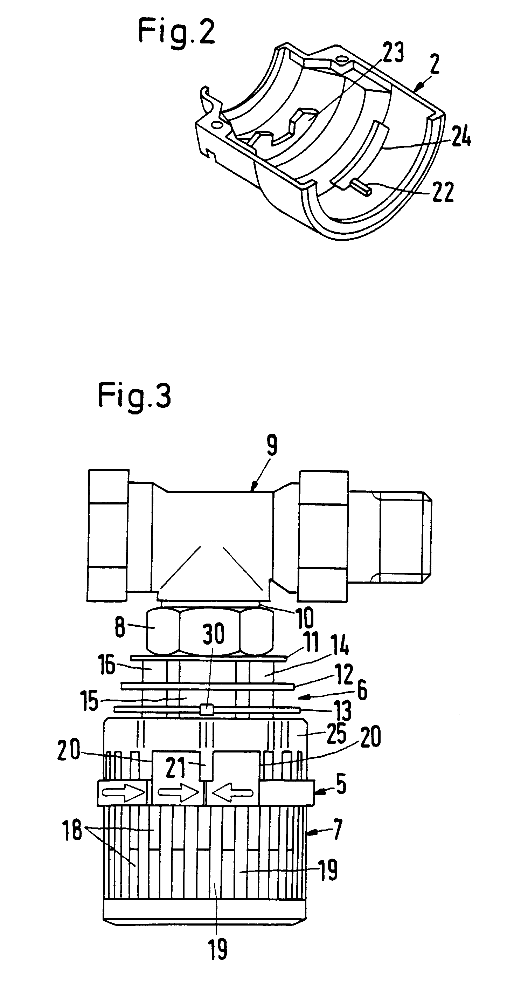

The thermostat 1 (Figs 1 and 3) has a housing 6, a rotary knob 7 arranged rotatably thereon for setting the desired value, and a union nut 8 which is arranged to rotate on one end of the housing 6. The housing 6 contains a temperature sensor and a thermostatic operating element. A desired value spring acts against the vapour pressure prevailing in the operating element, and its abutment can be displaced axially by means of the rotary knob 7 to adjust the desired value setting. The operating element carries a plunger which acts without fixed interconnection on a valve shaft. The valve shaft acts on the closure member of a valve 9, which is illustrated in Fig. 3. The coupling between the valve 9 and the housing 6 is formed by the union nut 8 and a threaded connecting piece 10 of the housing 6, onto which the union nut 8 is screwed. The housing 6 has circumferential ribs 11, 12, 13 which are joined by axial bridges 14, 15 and 16.

The rotary knob 7 tapers towards the end remote from the adjusting valve 9, so that the ring-shaped coupling element 5 can be pushed axially onto the rotary knob 7 into the axial position relative to the rotary knob 7 illustrated in Fig. 3. As the coupling element is pushed on, axial ribs 17 (Fig. 1) on the inside of the coupling element 5 engage in axial grooves 18, formed at the same angular intervals as the ribs 17, between axial ribs 19 on the outside of the rotary knob 7, so that the coupling element 5 and the rotary knob 7 are in interlocking engagement and cannot be rotated relative to one another.

The coupling element 5 also has axial projections 20, which define between them an intermediate gap 21 or slot.

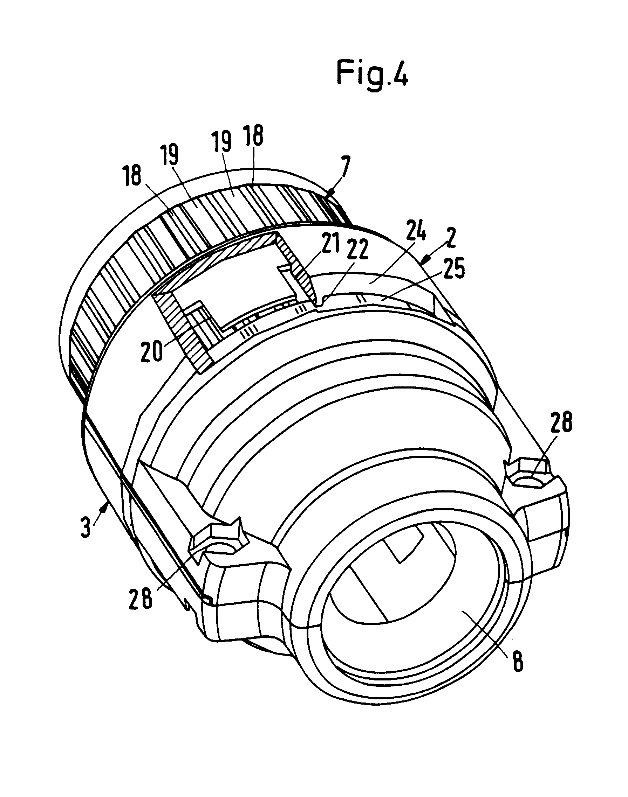

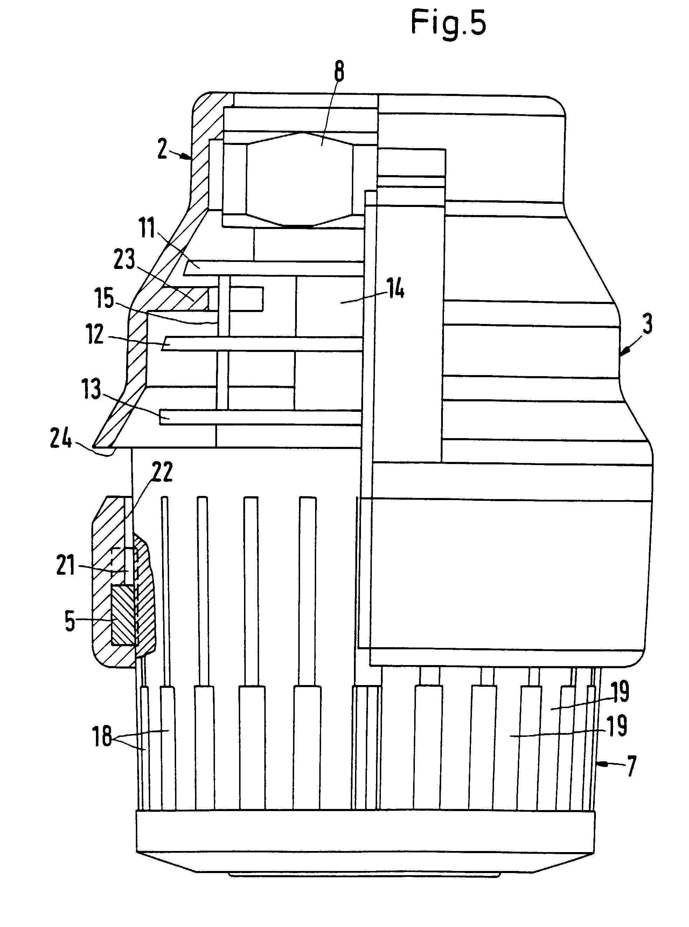

One half 2 of the security sleeve 4 has on its inside a projection 22 (see Figs 2 and 4 to 8) in the form of an axial rib which, in the assembled state, fits into the space 21 between the projections 20, as illustrated in Figs 4 to 6. In addition, the half 2 has on its inside an approximately U-shaped projection 23 which, in the assembled state of the thermostat 1 and security sleeve 4, engages over the bridge 15 of the thermostat housing 6 (see Fig. 5), so that the security sleeve 4 and the thermostat 6 are in interlocking engagement. An opening 24 in the half 2 allows a desired value scale 25 in the form of axially parallel marks I, II, III, IIII to be seen.

The other half 3 of the security sleeve 4 has on its inside two segments 26 (see Fig. 1) of circular ring-shaped discs, which extend in the circumferential direction of the half 3 and project radially inwards. One segment 26 engages in the mounted state between the ribs 11 and 12 and the other segment 26 engages between the ribs 12 and 13 of the thermostat housing 6, just as the projection 23 shown in Fig. 5 engages between the ribs 11 and 12. The half 3 is furthermore provided with continuous bores 27 in radial flanges and the half 2 is provided with continuous bores 28 in radial flanges. A respective screw 29, only one of which is illustrated, passes through each bore 28 and 27 and is screwed into a nut, not illustrated, to join the two halves 2 and 3 of the security sleeve 4 together, the security sleeve 4 being matched to the contour of the thermostat 1 and engaging over the coupling 8, 10 between the thermostat 1 and the adjusting valve 9, thus on the one hand enhancing the strength of the connection between the thermostat 1 and the valve 9 and on the other hand contributing to guarding against theft, because the union nut 8 is not readily accessible, and is only accessible after removal of the security sleeve 4. For that purpose, special screws 29 with nuts are used, which can be removed only by means of special screwdrivers.

The mode of operation of the security device in respect of setting of desired value is described in detail below.

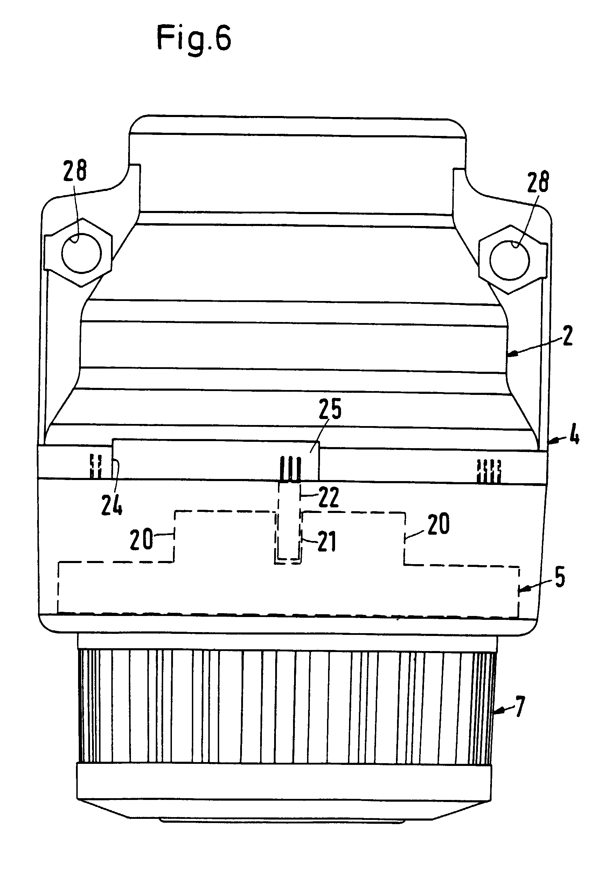

When the rotary knob 7 is to be fixedly set to the desired value III of the desired value scale 25, before mounting the security sleeve 4 the thermostat housing 6 and the rotary knob 7 are first of all rotated relative to one another, so that a marking 30 arranged on the housing 6 and aligned with the centre line of the bridge 15 (Fig. 3), points to the desired value III, as illustrated in Fig. 3. The coupling element 5 is then pushed axially onto the rotary knob 7 in a rotated angular position such that the space 21 between the projections 20 likewise aligns with the marking 30 and the desired value III. The halves 2 and 3 of the security sleeve 4 are then mounted so that the projection 22 formed on the inside of the half 2 engages the space 21 (see Figs 5 and 6) and the further projection 23 formed on the inside of the half 2 engages over the bridge 15 of the thermostat housing 6, as illustrated in Fig. 5. The halves 2 and 3 are then fixedly joined together by the screws 29 and nuts. The rotary knob 7 can then no longer be rotated relative to the thermostat housing 6 because the thermostat housing 6 and the rotary knob 7 are interlocked with one another by way of the security sleeve 4 and the coupling element 5, and are secured against rotation. The desired value III therefore remains fixedly set.

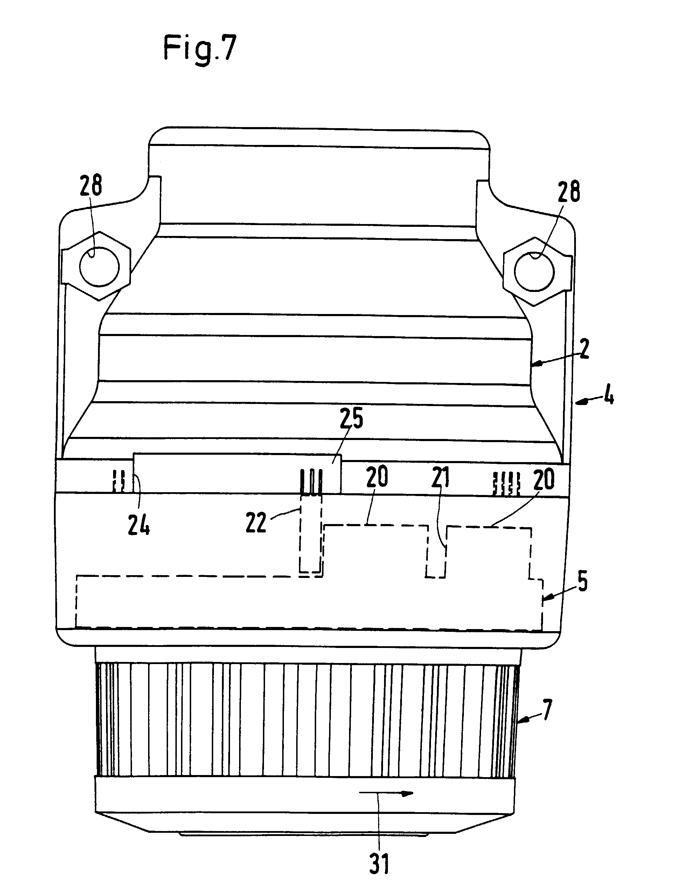

If, on the other hand, the desired value is to be adjustable within a limited range, for example, between a low value, which corresponds to the closed position of the valve 9, and III, which corresponds to a half-open position of the valve 9, then the thermostat housing 6 and the rotary knob 7 are brought into the same rotated angular position relative to one another, as illustrated in Figs 3 and 7. The coupling element 5, however, is pushed onto the rotary knob 7 in such a rotated angular position relative to the knob that the projection 20 on the left in Fig. 7 lies a little to the right of the middle of the marking of the desired value III. The halves 2 and 3 of the security sleeve 4 are then again mounted on the housing 6 in the same position as in Fig. 6, so that the projection 22 lies against the (in Fig. 7) left-hand edge of the left-hand projection 20. The rotary knob 7 can then be rotated in the direction of the arrow 31 in Fig. 7 together with the coupling element relative to the thermostat housing 6 and the security sleeve 4, so that a desired value in the restricted range between the low value and III can be set.

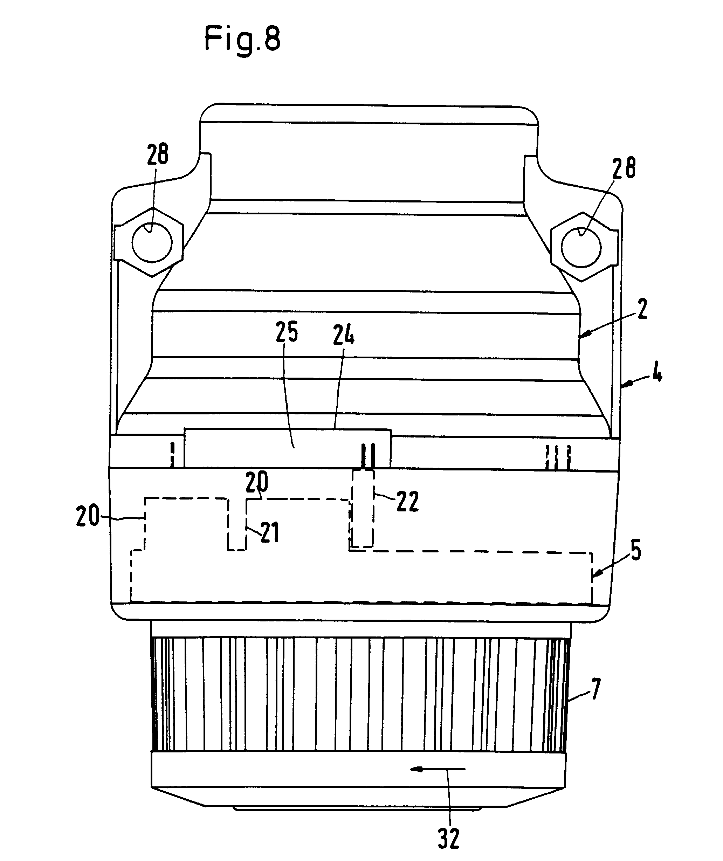

So that the desired value can be set in a restricted range extending from an intermediate setting of the adjustment valve 9, which corresponds, for example, to the desired value II, to the open position of the adjusting valve 9, which corresponds to the maximum desired value, the thermostat housing 6 and the rotary knob 7 are rotated relative to one another so that the marking on the scale 25 corresponding to the desired value II aligns with the marking 30. The coupling element 5 is pushed onto the rotary knob 7 in such a rotated angular position that the right-hand edge of the right-hand projection 20 in Fig. 8 lies somewhat to the left of the marking corresponding to the desired value II, so that after mounting the security sleeve 4 the projection 22 lies against the right-hand edge of the right-hand projection 20 and likewise aligns with the marking corresponding to the desired value II. The rotary knob 7 can then be turned together with the coupling element 5 relative to the thermostat housing 6 and the security sleeve 4 from the position illustrated in Fig. 8 only to the left in the direction of the arrow 32 (anti-clockwise), which corresponds to a desired value setting in the range between the desired value II and the maximum desired value. Rotation of the rotary knob 7 to the right in the opposite direction to the arrow 32 out of the position shown in Fig. 8 is impossible, because the right-hand projection 20 would strike against the projection 22.

## Claims

1. A security device for a thermostat (1), which co-operates with an adjusting valve (9), in particular for radiators, for securing the thermostat (1) against theft and against damage and for securing a sleeve-like, axially ribbed rotary knob (7) on the thermostat housing (6), which knob serves for adjustment of the desired value, against a predefined rotation, in particular for securing the set angular rotated position of a rotary knob (7), the security device having a security sleeve (4) which on the one hand engages over a coupling (8, 10) between the thermostat housing (6) and the adjusting valve (9) and on the other hand engages over the rotary knob (7) and is arranged to be non-rotatably connected to the thermostat housing (6) and the rotary knob (7), characterized in that between the rotary knob (7) and the security sleeve (4) there is arranged a coupling element (5) which in different rotated angular positions in relation to the rotary knob (7) is either arranged to be non-rotatably coupled to the knob and to the security sleeve (4), or allows a limited rotation of the rotary knob (7) relative to the thermostat housing (6) for an adjustment of the desired value between two desired value limits, of which at least one limit is selectable by the non-rotatable coupling of the coupling element (5) in a rotated angular position, corresponding to this desired value limit, relative to the rotary knob (7).

2. A security device according to claim 1, characterized in that the limited adjustment range of the rotary knob (7) extends between a minimum setting and an intermediate setting or between an intermediate setting and a maximum setting.

3. A security device according to claim 1 or 2, characterized in that the rotary knob (7) is conical and the coupling element (5) is a ring which is axially ribbed on its inside correspondingly to the rotary knob (7).

4. A security device according to claim 3, characterized in that the coupling element (5) and the security sleeve (4) are arranged to be brought into interlocking engagement.

5. A security device according to claim 4, characterized in that the coupling element (5) has axial projections (20), and a projection (22) formed on the inside of the security sleeve (4) is caused to engage the space (21) between these projections so that it rests against them.

6. A security device according to one of claims 1 to 5, characterized in that the security sleeve (4) and the thermostat housing (6) are arranged to be brought into interlocking engagement.

7. A security device according to one of claims 1 to 6, characterized in that the security sleeve (4) has on its inside an approximately U-shaped projection (23) which engages over an axial bridge (15) of the thermostat housing (6).

8. A security device according to one of claims 1 to 7, characterized in that the security sleeve (4) comprises two separate halves (2, 3) which can be joined by means of screws (29).

## Patentansprüche

1. Sicherungseinrichtung für einen Thermostaten (1), der mit einem Stellventil (9) zusammenwirkt, insbesondere für Heizkörper, zur Sicherung des Thermostaten (1) gegen Diebstahl und gegen Zerstörung und zur Sicherung einer hülsenartigen, axial gerippten Drehgriff (7) am Thermostatgehäuse (6), der zur Einstellung des gewünschten Wertes dient, gegen eine vorbestimmte Drehung, insbesondere zur Sicherung der eingestellten Drehwinkellage des Drehgriffs (7), wobei die Sicherungseinrichtung eine Sicherungshülse (4) hat, die einerseits die Kupplung (8, 10) zwischen Thermostatgehäuse (6) und Stellventil (9) und andererseits den Drehgriff (7) übergreift und mit dem Thermostatgehäuse (6) und dem Drehgriff (7) drehfest verbindbar ist, **dadurch gekennzeichnet,** daß zwischen dem Drehgriff (7) und der Sicherungshülse (4) ein Kupplungselement (5) angeordnet ist, das in verschiedenen Drehwinkellagen in bezug auf den Drehgriff (7) mit diesem und mit der Sicherungshülse (4) entweder drehfest kuppelbar ist oder eine begrenzte Drehung des Drehgriffs (7) relativ zum Thermostatgehäuse (6) für eine Einstellung des Sollwerts zwischen zwei Sollwertgrenzen zuläßt, von denen wenigstens die eine Grenze durch die drehfeste Kupplung des Kupplungselements (5) in einer dieser Sollwertgrenze entsprechenden Drehwinkellage relativ zum Drehgriff (7) wählbar ist.

2. Sicherungseinrichtung nach Anspruch 1, **dadurch gekennzeichnet,** daß der begrenzte Einstellbereich des Drehgriffs (7) zwischen einer Minimalstellung und einer Zwischenstellung oder zwischen einer Zwischenstellung und einer Maximalstellung liegt.

3. Sicherungseinrichtung nach Anspruch 1 oder 2, **dadurch gekennzeichnet,** daß der Drehgriff (7) konisch und das Kupplungselement (5) ein auf seiner Innenseite entsprechend dem Drehgriff (7) axial gerippter Ring ist.

4. Sicherungseinrichtung nach Anspruch 3, **dadurch gekennzeichnet,** daß das Kupplungselement (5) und die Sicherungshülse (4) formschlüssig in Eingriff bringbar sind.

5. Sicherungseinrichtung nach Anspruch 4, **dadurch gekennzeichnet,** daß das Kupplungselement (5) axiale Vorsprünge (20) aufweist, mit deren Zwischenraum (21) ein an der Innenseite der Sicherungshülse (4) ausgebildeter Vorsprung (22) an den Vorsprüngen (20) anliegend in Eingriff bringbar ist.

6. Sicherungseinrichtung nach einem der Ansprüche 1 bis 5, **dadurch gekennzeichnet,** daß die Sicherungshülse (4) und das Thermostatgehäuse (6) formschlüssig in Eingriff bringbar sind.

7. Sicherungseinrichtung nach einem der Ansprüche 1 bis 6, **dadurch gekennzeichnet,** daß die Sicherungshülse (4) auf ihrer Innenseite einen etwa U-förmigen Vorsprung (23) aufweist, der einen axialen Steg (15) des Thermostatgehäuses (6) übergreift.

8. Sicherungseinrichtung nach einem der Ansprüche 1 bis 7, **dadurch gekennzeichnet,** daß die Sicherungshülse (4) aus zwei getrennten Hälften (2, 3) besteht, die mittels Schrauben (29) verbindbar sind.

## Revendications

1. Dispositif de sécurité pour un thermostat (1), qui coopère avec une soupape de réglage (9), en particulier pour des radiateurs, pour protéger le thermostat (1) vis-à-vis d'un vol ou d'un endommagement et pour bloquer un bouton rotatif en forme de manchon (7) pourvu de nervures axiales sur le boîtier (6) du thermostat, lequel bouton sert à régler la valeur désirée, à l'encontre d'une rotation prédéfinie, en particulier pour fixer la position angulaire en rotation de consigne du bouton rotatif (7), le dispositif de sécurité comportant un manchon de sécurité (4), qui d'une part s'engage sur un accouplement (8,10) situé entre le boîtier (6) du thermostat et la soupape de réglage (9) et d'autre part s'engage sur le bouton rotatif (7) et est disposé de manière à être raccordé, sans possibilité de rotation, au boîtier (6) du thermostat et au bouton rotatif (7), caractérisé en ce qu'entre le bouton rotatif (7) et le manchon de sécurité (4) est disposé un élément d'accouplement (5), qui, dans différentes positions angulaires en rotation par rapport au bouton rotatif (7), est disposé de manière à être accouplé, sans possibilité de rotation, au bouton et au manchon de sécurité (4), ou permet une rotation limitée du bouton rotatif (7) par rapport au boîtier (6) du thermostat pour un réglage de la valeur désirée entre deux valeurs limites désirées, parmi lesquelles au moins une limite peut être choisie au moyen de l'accouplement sans possibilité de rotation de l'élément d'accouplement (5) dans une position angulaire de rotation, correspondant à cette valeur limite désirée, par rapport au bouton rotatif (7).

2. Dispositif de sécurité selon la revendication 1, caractérisé en ce que la gamme de réglage limitée du bouton rotatif (7) s'étend entre une position de réglage minimum et une position de réglage intermédiaire ou entre une position de réglage intermédiaire et une position de réglage maximum.

3. Dispositif de sécurité selon la revendication 1 ou 2, caractérisé en ce que le bouton rotatif (7) est conique et que l'élément d'accouplement (5) est une bague qui est nervurée axialement sur sa face intérieure, d'une manière correspondant au bouton rotatif (7).

4. Dispositif de sécurité selon la revendication 3, caractérisé en ce que l'élément d'accouplement (5) et le manchon de sécurité (4) sont disposés de manière à être amenés à engrener avec verrouillage.

5. Dispositif de sécurité selon la revendication 4, caractérisé en ce que l'élément d'accouplement (5) possède des parties saillantes axiales (20), et qu'une partie saillante (22) formée sur la face intérieure du manchon de sécurité (4) est amenée à s'engager dans l'espace (21) situé entre ces parties saillantes de manière à être en appui contre ces dernières.

6. Dispositif de sécurité selon l'une des revendications 1 à 5, caractérisé en ce que le manchon de sécurité (4) et le boîtier (6) du thermostat sont disposés de manière à être amenés à engrener avec verrouillage.

7. Dispositif de sécurité selon l'une des revendications 1 à 6, caractérisé en ce que le manchon de sécurité (4) possède sur sa face intérieure une partie saillante (23) approximativement en forme de U qui s'engage au-dessus d'un étrier axial (15) du boîtier (6) du thermostat.

8. Dispositif de sécurité selon l'une quelconque des revendications 1 à 7, caractérisé en ce que le manchon de sécurité (4) comprend deux moitiés séparées (2,3), qui peuvent être réunies au moyen de vis (29).
